# EUROPÄISCHE PATENTSCHRIFT

(11) **EP 0 633 646 B1**
(45) Veröffentlichungstag und Bekanntmachung des Hinweises auf die Patenterteilung: **26.03.1997**
(21) Anmeldenummer: 94108799.1
(22) Anmeldetag: 08.06.1994
(51) Int. Cl.: H02K 5/173, F16C 35/06

(54) **Lageranordnung für Elektro-Kleinmotoren**
Bearing assembly for miniature electric motor
Montage de palier pour moteur électrique miniature

(30) Priorität: 07.07.1993 DE 4322575
(43) Veröffentlichungstag der Anmeldung: 11.01.1995
(73) Patentinhaber: EBM ELEKTROBAU MULFINGEN GmbH & Co., D-74673 Mulfingen (DE)
(72) Erfinder: Best, Dieter, D-74653 Ingelfingen (DE)
(74) Vertreter: Patentanwälte Dr. Solf & Zapf

(56) Entgegenhaltungen:
- EP-A- 0 412 954
- DE-A- 2 712 824
- DE-U- 8 908 588

## Beschreibung

Die vorliegende Erfindung betrifft eine Lageranordnung für Elektromotoren, insbesondere Außenläufermotoren, wobei zur drehbaren Lagerung eines Rotors mindestens ein in einer Aufnahme eines Lageraufnahmeteils eines Stators sitzendes Lagerelement vorgesehen ist.

Ein Stator für einen Außenläufermotor mit einer gattungsgemäßen Lageranordnung ist beispielsweise aus der DE-PS 27 12 824 bekannt. Wie allgemein üblich, besteht der Außenläufermotor aus einem innenliegenden Stator mit einem Blechpaket und einer Statorwicklung sowie aus einem topfartigen, den Stator von einer Stirnseite, der sogenannten Rotorseite, her umschließenden Rotor, dessen Boden mit einer zentrischen, innerhalb des Stators über Lagerelemente, üblicherweise zwei Kugellager, drehbar gelagerten Welle verbunden ist. Jedes Lagerelement sitzt in einer im wesentlichen zylindrischen Aufnahme eines rohrstückartigen, sich axial vom Statorblechpaket weg erstreckenden Lageraufnahmeteils, wobei diese Lageraufnahmeteile einstückig mit einem - unter anderem auch zur Isolation zwischen Statorwicklung und Blechpaket dienenden - Stator-Isolationsteil ausgebildet sind.

Bei derartigen Lageranordnungen besteht nun das Problem, daß das Stator-Isolationsteil - bedingt durch seine Herstellung im Kunststoff-Spritzgußverfahren - im Bereich der Lager-Aufnahmen nicht unmittelbar die erforderliche Genauigkeit des Lagersitzes gewährleistet, sondern häufig vor allem von der gewünschten, idealen Zylinderkontur abweicht. Daher ist ein spezieller Bearbeitungsvorgang der Innenflächen (Lagersitze) der Lager-Aufnahmen erforderlich, um einen einwandfreien und paßgenauen Sitz der Lagerelemente zu gewährleisten, was auch zur Vermeidung von Exzentrizität und Fluchtungsfehlern zwischen den Lagern von Bedeutung ist. Dieser zusätzliche Bearbeitungsvorgang führt zwar nachteiligerweise zu hohen Herstellungskosten, kann aber auch nicht einfach unterlassen werden, weil ansonsten - z.B. bei Abweichungen der Lagersitze von der an sich gewünschten Zylinderkontur - Verformungen der Lager-Außenringe und damit ein erhöhtes Laufgeräusch des Motors sowie eine wesentlich reduzierte Lebensdauer der Lagerelemente die Folge sein würden.

Der vorliegenden Erfindung liegt daher die Aufgabe zugrunde, ein Lageranordnung der gattungsgemäßen Art zu schaffen, bei der auch ohne gesonderte Bearbeitung der Lager-Aufnahme ein einwandfreier, optimaler Lagersitz und damit eine lange Lager-Haltbarkeit (Standzeit) gewährleistet ist.

Erfindungsgemäß wird dies dadurch erreicht, daß die Aufnahme des Lager-Aufnahmeteils einerseits von formstabilen (starren, ortsfesten), das Lagerelement durch Anlage an mindestens drei umfänglich verteilten Stellen positionierenden Abschnitten sowie andererseits von mindestens einem in radialer Richtung elastisch verformbaren, das Lagerelement kraftschlüssig halternden Abschnitt gebildet ist.

Somit wird das Lagerelement zumindest durch eine Dreipunktanlage über die formstabilen Bereiche eindeutig positioniert, wobei eine kraftschlüssige, klemmende Halterung über den oder die elastischen Bereiche durch federelastische Anlage (mit einer radial nach innen gerichteten elastischen Haltekraft) an mindestens einer Stelle des Umfanges erfolgt.

Erfindungsgemäß ist es nun aber besonders zweckmäßig, wenn die beiden Arten der Abschnitte der Aufnahme insbesondere mit der gleichen Anzahl in abwechselnder Reihenfolge gleichmäßig über den Umfang der Aufnahme verteilt angeordnet sind, so daß auch die kraftschlüssige Halterung durch federelastische Anlage in mehreren, insbesondere mindestens drei, umfänglich verteilten Punkten bzw. relativ kleinen Flächenbereichen erfolgt.

Durch die Erfindung kann vorteilhafterweise allein durch den Spritzgußvorgang ein hinreichend genauer Lagersitz bei gleichzeitig guter Halterung des Lagers erreicht werden, denn aufgrund der einzelnen formstabilen ("starren") Aufnahme-Abschnitte kann - im Vergleich zu einer "starren", in Umfangsrichtung durchgehend zylindrischen Innenkontur - sehr viel einfacher die "ideale" Zylinderkontur definiert werden. Denn durch die erfindungsgemäße "Aufteilung" der Lager-Aufnahme, d.h. die Bildung von mindestens drei formstabilen, praktisch "punktförmigen" Anlage-Bereichen, kann ein Herstellungswerkzeug empirisch, d.h. durch "Probe-Spritzungen" mit anschließenden Messungen der Aufnahme und entsprechenden Nachbearbeitungen des Werkzeug-Formstempels, relativ leicht so zubereitet werden, daß später bei allen damit hergestellten Lager-Aufnahmen die - eindeutig eine innere, der Lager-Außenkontur entsprechende Zylinderkontur festlegende - Anlage in mindestens drei Punkten (bzw. relativ kleinen Flächenbereichen) gewährleistet ist. Die übrigen Bereiche der formstabilen Abschnitte verlangen dadurch nur noch eine weniger genaue Fertigung; hier reicht es aus, wenn hier ein geringer Radialabstand zum Lager von beispielsweise 1/100 bis 2/100 mm vorhanden ist, wobei diese Abweichung von der idealen Zylinderkontur dann aber vorteilhafterweise absolut unschädlich bezüglich der Lager-Halterung ist, d.h. keinerlei Verformungen des Lager-Außenringes mehr verursachen kann. Eventuelle Maßabweichungen der jeweils dazwischenliegenden, elastischen Bereiche sind aufgrund von deren Radialbeweglichkeit bezüglich der Lager-Positionierung ebenfalls absolut unschädlich. Erfindungsgemäß weichen die elastischen Abschnitte sogar ganz bewußt von der Zylinderkontur ab, indem sie - vor Montage des Lagerelementes - bereichsweise geringfügig in radialer Richtung nach innen in die von den Anlagepunkten bzw. -flächen der formstabilen Abschnitte definierte und im wesentlichen der Außenkontur des Lagerelementes entsprechende Zylinderkontur hineinragen, so daß sie bei Montage des Lagerelementes von diesem unter Entstehung einer radial nach innen gerichteten Haltekraft elastisch nach außen gedrängt werden. Hierbei erfolgt vorteilhafterweise eine selbsttätige Anpassung an die ideale Zylinderkontur, d.h. an die Außenkontur des Lagerelementes, so daß sogar von einer "Selbstzentrierung" des Lagerelementes gesprochen werden kann.

Weitere vorteilhafte Ausgestaltungsmerkmale der Erfindung sind in den Unteransprüchen und der folgenden Beschreibung enthalten.

Anhand eines in der Zeichnung dargestellten, bevorzugten Ausführungs- und Anwendungsbeispiels soll im folgenden die Erfindung näher erläutert werden. Dabei zeigen:
- Fig. 1: eine Draufsicht auf eine Stirnseite, und zwar auf die mit einem Motorflansch zu verbindende Stirnseite eines Stators eines Außenläufermotors (Ansicht in Pfeilrichtung I gemäß Fig. 2) mit einer erfindungsgemäßen Lageranordnung, allerdings ohne Darstellung eines Lagerelementes,
- Fig. 2: einen Axialschnitt durch den Stator in der Schnittebene II-II gemäß Fig. 1 (entspricht dem Schnitt II-II in Fig. 3) wiederum ohne Lagerelemente,
- Fig. 3: eine Draufsicht auf die andere, einem Motorflansch abgekehrte Stirnseite des Stators ebenfalls ohne Darstellung des Lagerelementes,
- Fig. 4: eine vergrößerte Teilansicht des Bereichs IV in Fig. 1,
- Fig. 5: eine vergrößerte Teilansicht des Bereichs V in Fig. 3,
- Fig. 6: eine vergrößerte Teilansicht des Bereichs VI in Fig. 2 mit zusätzlicher Darstellung des im Lageraufnahmeteil sitzenden Lagerelementes und
- Fig. 7: eine vergrößerte Teilansicht des Bereichs VII in Fig. 2 ebenfalls mit Darstellung des Lagerelementes.

In den verschiedenen Figuren der Zeichnung sind gleiche Teile stets mit den gleichen Bezugszeichen versehen.

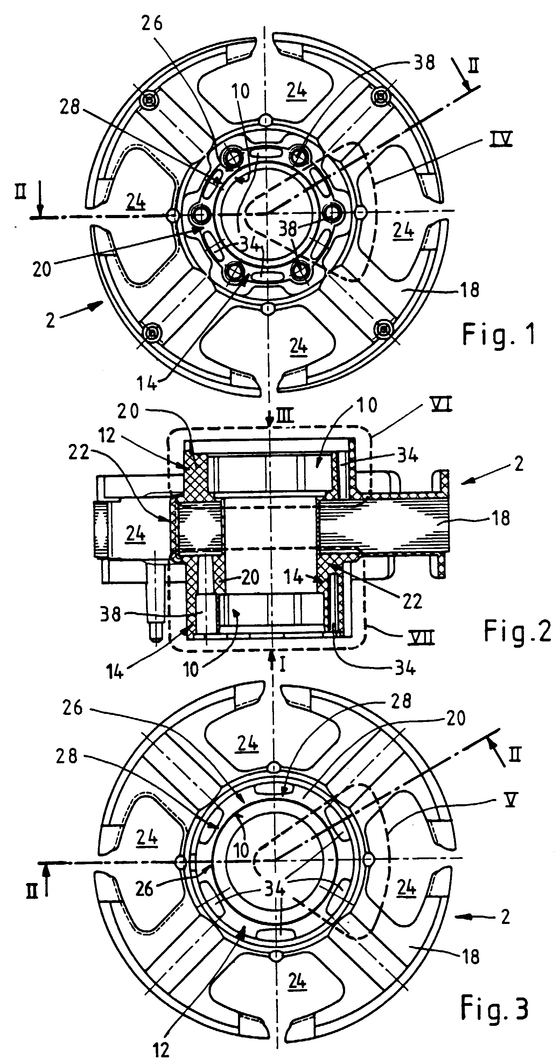

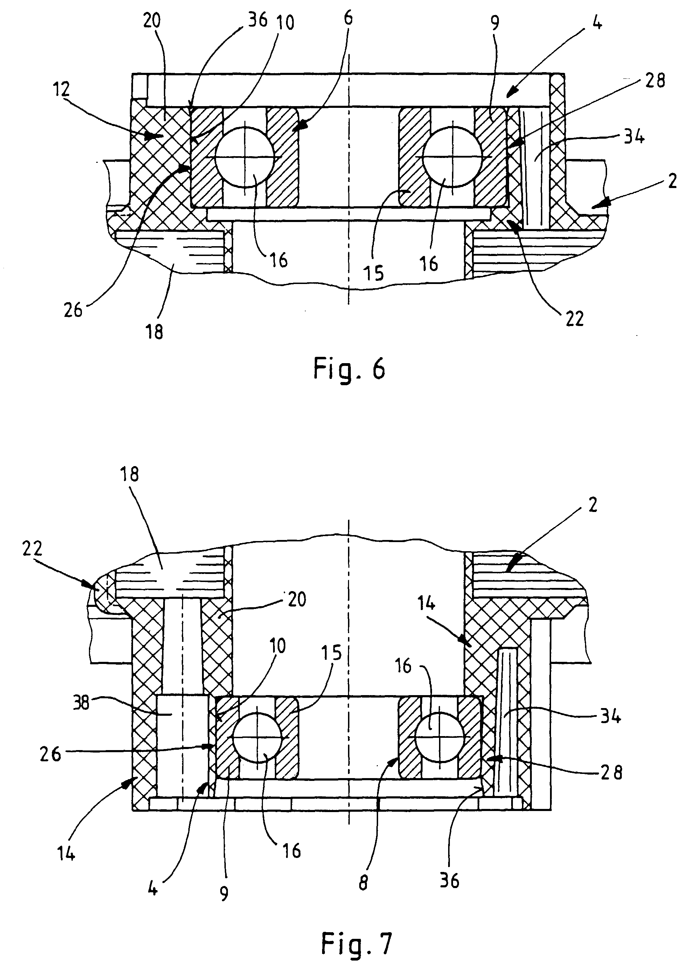

In den Figuren 1 bis 3 ist ein Stator 2 eines Elektro-Außenläufermotors veranschaulicht (Darstellung allerdings ohne Statorwicklung), der zur Drehlagerung eines nicht dargestellten Rotors (Außenläufers) eine erfindungsgemäße Lageranordnung 4 (s. hierzu insbesondere Fig. 6 und 7) mit vorzugsweise zwei axial beabstandeten, koaxialen, insbesondere als Wälzlager (Kugellager) ausgebildeten Lagerelementen 6 und 8 aufweist. Jedes Lagerelement 6, 8 sitzt mit einem Außenring 9 in einer insgesamt im wesentlichen zylindrischen Aufnahme (Innenumfangsfläche) 10 eines Lageraufnahmeteils 12, 14 des Stators 2 und besitzt einen von einer nicht dargestellten Rotorwelle zu durchsetzenden Innenring 15 sowie übliche Wälzkörper 16, insbesondere Kugeln, zwischen Außen- und Innenring 9, 15 (Fig. 6 und 7).

Wie sich vor allem aus Fig. 2 ergibt, ist ein Statorblechpaket 18 des Stators 2 auf seinen beiden Stirnseiten mit jeweils einem rohrstückartigen, sich axial erstreckenden Ansatz 20 aus Kunststoff ausgestattet, der außenseitig als Wickelkopfträger und innenseitig als jeweiliges Lageraufnahmeteil 12, 14 dient. d.h. die Aufnahme 10 bildet. Vorzugsweise sind die rohrstückartigen Ansätze 20 jeweils einstückig mit einem Stator-Isolationsteil 22 ausgebildet, welches das Statorblechpaket 18 vor allem zur Isolation gegen die nicht dargestellte Wicklung zumindest im Bereich beider Stirnseiten und in den Nutbereichen 24 umschließt. Zur Bildung des Isolationsteils 22 wird das Blechpaket 18 im Kunststoff-Spritzgußverfahren umspritzt.

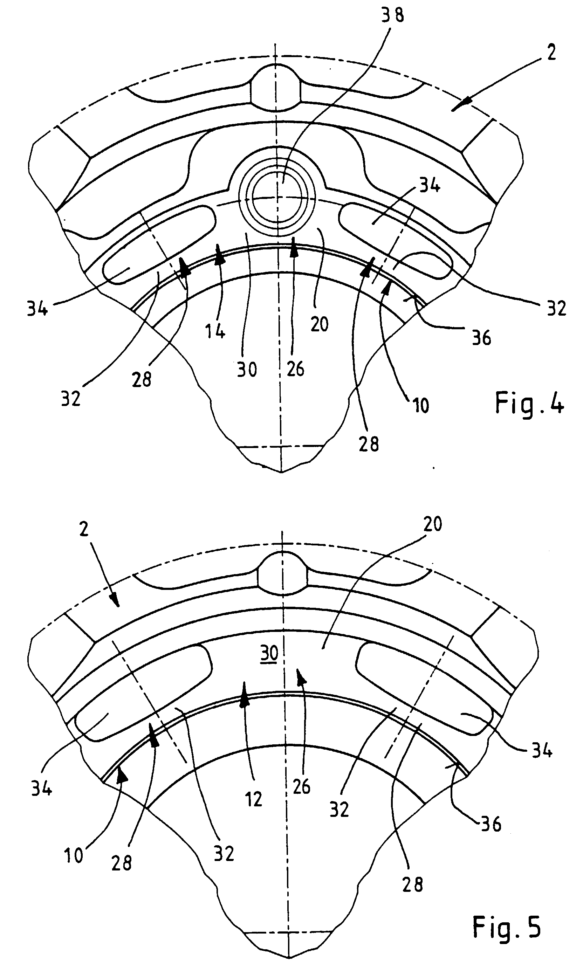

Wie sich nun insbesondere aus den Figuren 4 und 5 ergibt, ist gemäß der vorliegenden Erfindung die Aufnahme 10 des bzw. jedes Lageraufnahmeteils 12, 14 einerseits von relativ formstabilen, d.h. starren und damit ortsfesten, zumindest über drei Lager-Anlagepunkte (bzw. Anlageflächen mit relativ geringer Flächengröße) eine innere Zylinderkontur und damit die Lage des Lagerelementes 6, 8 definierenden Abschnitten 26 sowie andererseits von vorzugsweise mehreren, in radialer Richtung elastisch verformbaren, das Lagerelement 6, 8 kraftschlüssig (klemmend) halternden Abschnitten 28 gebildet. Dabei sind die beiden Arten der Abschnitte 26, 28 der Aufnahme 10 vorzugsweise in abwechselnder Reihenfolge gleichmäßig über den Umfang der Aufnahme 10 des jeweiligen Lageraufnahmeteils 12,14 verteilt angeordnet (s. hierzu auch Fig. 1 und 3). Im dargestellten, bevorzugten Ausführungsbeispiel sind jeweils sechs formstabile Abschnitte 26 sowie sechs elastische Abschnitte 28 vorgesehen, wobei aber auch hierbei die formstabilen Abschnitte 26 nur eine "Dreipunktanlage" zu gewährleisten brauchen. Um die kraftschlüssige Halterung des jeweiligen Lagerelementes 6, 8 durch die elastischen Abschnitte 28 zu erzeugen, sind diese derart geformt, daß sie vor Montage des Lagerelementes 6, 8 bereichsweise geringfügig in radialer Richtung nach innen in die von den Lager-Anlagestellen der formstabilen Abschnitte 26 definierte und im wesentlichen der Außenkontur des Lagerelementes entsprechende Zylinderkontur hineinragen. Gemäß Fig. 4 und 5 handelt es sich hierbei um eine sehr geringfügige Verdickung im Bereich der Innenfläche der Aufnahme 10. Hierdurch werden die elastisch verformbaren Abschnitte 28 bei Montage des Lagerelementes 6,8 von diesem radial nach außen gedrängt, wodurch eine radial nach innen gerichtete, federelastische Haltekraft erzeugt wird (Kraft- oder Reibschluß).

Wie weiterhin in der Zeichnung erkennbar ist, weist jeder rohrstückartige Ansatz 20 des Isolationsteils 22 vorzugsweise innenseitig eine umfänglich durchgehende, im wesentlichen zylindrische Innenkontur auf, die von die relativ formstabilen Abschnitte 26 bildenden Bereichen 30 sowie von in radialer Richtung gemessen dünneren und daher elastisch verformbaren und so die elastischen Abschnitte 28 bildenden Wandungsbereichen 32 gebildet ist. Diese Bereiche 30, 32 gehen somit vorzugsweise in Umfangsrichtung jeweils einstückig ineinander über. Es liegt jedoch ebenfalls im Bereich der Erfindung, die Bereiche 30 und 32 jeweils durch axiale Schlitze voneinander zu trennen (nicht dargestellt). Zweckmäßigerweise sind die dünneren Wandungsbereiche 32 durch axiale, jeweils in Umfangsrichtung zwischen zwei formstabilen Bereichen 30 angeordnete Ausnehmungen 34 in der Wandung des rohrstückartigen Ansatzes 20 gebildet. Diese Ausnehmungen 34 können - wie dargestellt -"taschenförmig" insbesondere mit einer etwa ovalen bzw. elliptischen oder nierenförmigen Querschnittsform ausgebildet sein. Es ist aber ebenfalls möglich, daß die Ausnehmungen 34 radial nach außen randoffen, d.h. praktisch als axial verlaufende Nutvertiefungen auf der Außenseite des jeweiligen Ansatzes 20 ausgebildet sind.

Um das Einsetzen des jeweiligen Lagerelementes 6, 8 zu erleichtern, ist es vorteilhaft, wenn das jeweilige Lageraufnahmeteil 12, 14 auf seiner Öffnungsseite eine angefaste und damit eine Art "Einführtrichter" bildende Innenumfangskante 36 aufweist (s. inbesondere Fig. 4 und 5).

Gemäß Fig. 1, 2, 4 und 7 weist das einem nicht dargestellten Motorflansch zugekehrte, flanschseitige bzw. "statorseitige" Lageraufnahmeteil 14 im Bereich zumindest einer Teilmenge der formstabilen Bereiche 30 des rohrstückartigen Ansatzes 20, vorzugsweise jedoch in jedem formstabilen Bereich 30, axiale Befestigungsöffnungen 38 (Bohrungen oder Gewindelöcher) zur Halterung des Stators 2 an dem Motorflansch auf. Hierbei greifen Schraubverbindungen durch Löcher des Flansches in die Befestigungsöffnungen 38 ein (nicht dargestellt).

## Patentansprüche

1. Lageranordnung (4) für Elektromotoren, insbesondere Außenläufermotoren, wobei zur drehbaren Lagerung eines Rotors mindestens ein in einer Aufnahme (10) eines Lageraufnahmeteils (12, 14) eines Stators (2) sitzendes Lagerelement (6, 8) vorgesehen ist,
**dadurch gekennzeichnet**, daß die Aufnahme (10) des Lageraufnahmeteils (12; 14) einerseits von formstabilen, das Lagerelement (6; 8) durch Anlage an mindestens drei umfänglich verteilten Stellen positionierenden Abschnitten (26) sowie andererseits von mindestens einem in radialer Richtung elastisch verformbaren, das Lagerelement (6; 8) durch kraftschlüssige Anlage halternden Abschnitt (28) gebildet ist.

2. Lageranordnung nach Anspruch 1,
**dadurch gekennzeichnet**, daß mindestens zwei, vorzugsweise mindestens drei, elastisch verformbare Abschnitte (28) über den Umfang verteilt angeordnet sind.

3. Lageranordnung nach Anspruch 1 oder 2,
**dadurch gekennzeichnet**, daß die beiden Arten der Abschnitte (26, 28) der Aufnahme (10) mit einer gleichen Anzahl von insbesondere jeweils sechs Abschnitten (26, 28) in abwechselnder Reihenfolge gleichmäßig über den Umfang der Aufnahme (10) des Lageraufnahmeteils (12; 14) verteilt angeordnet sind.

4. Lageranordnung nach einem oder mehreren der Ansprüche 1 bis 3,
**dadurch gekennzeichnet**, daß der bzw. jeder elastisch verformbare Abschnitt (28) vor Montage des Lagerelementes (6;8) bereichsweise geringfügig in radialer Richtung nach innen in eine von den formstabilen Abschnitten (26) definierte Zylinderkontur hineinragt, so daß er bei Montage des Lagerelementes (6; 8) von diesem unter Entstehung einer radial nach innen gerichteten Haltekraft elastisch nach außen gedrängt wird.

5. Lageranordnung nach einem oder mehreren der Ansprüche 1 bis 4,
**dadurch gekennzeichnet**, daß das Lageraufnahmeteil (12; 14) von einem rohrstückartigen, einstückigen Ansatz (20) eines Stator-Isolationsteils (22) gebildet ist.

6. Lageranordnung nach Anspruch 5,
**dadurch gekennzeichnet**, daß der rohrstückartige Ansatz (20) zumindest innenseitig eine umfänglich geschlossene, im wesentlichen zylindrische Kontur aufweist, die sich aus die formstabilen Abschnitte (26) der Aufnahme (10) bildendenden Bereichen (30) sowie aus dünneren, die elastischen Abschnitte (28) bildenden Wandungsbereichen (32) zusammensetzt.

7. Lageranordnung nach Anspruch 6,
**dadurch gekennzeichnet,** daß die dünneren Wandungsbereiche (32) durch axiale, jeweils in Umfangsrichtung zwischen zwei formstabilen Bereichen (30) angeordnete Ausnehmungen (34) des rohrstückartigen Ansatzes (20) gebildet sind.

8. Lageranordnung nach einem oder mehreren der Ansprüche 1 bis 7,
**dadurch gekennzeichnet,** daß das Lageraufnahmeteil (12; 14) auf der Öffnungsseite der Aufnahme (10) eine angefaste Innenumfangskante (36) aufweist.

9. Lageranordnung nach einem oder mehreren der Ansprüche 1 bis 8,
**dadurch gekennzeichnet,** daß zur Drehlagerung des Rotors zwei gleichartig in jeweils einem Lageraufnahmeteil (12; 14) gehalterte und im Bereich der axial gegenüberliegenden Stator-Stirnseiten angeordnete Lagerelemente (6; 8) vorgesehen sind.

10. Lageranordnung nach einem oder mehreren der Ansprüche 1 bis 9,
**dadurch gekennzeichnet,** daß das Lageraufnahmeteil (12; 14) bzw. zumindest eines der Lageraufnahmeteile (14) im Bereich zumindest einer Teilmenge der formstabilen Bereiche (30) des rohrstückartigen Ansatzes (20) axiale Befestigungsöffnungen (38) zur Halterung des Stators (2) an einem Motorflansch aufweist.

11. Lageranordnung nach einem oder mehreren der Ansprüche 1 bis 10,
**dadurch gekennzeichnet,** daß das bzw. jedes Lagerelement (6; 8) als Wälzlager mit einem kraftschlüssig in dem jeweiligen Lageraufnahmeteil (12; 14) gehalterten Außenring (9) und einem von einer Rotorwelle zu durchsetzenden Innenring (15) ausgebildet ist.

## Claims

1. Bearing arrangement (4) for an electric motor, in particular of the external rotor type, in which at least one bearing element (6; 8) is provided to support and allow rotation of a rotor, the said element being seated in a mounting (10) of a bearing holder (12; 14) of a stator,
**characterized in that**
the mounting (10) of the bearing holder (12; 14) comprises, on the one hand, sections (26) having inherently stable shape which hold the bearing element (6; 8) in position by resting against it in at least three circumferentially distributed places, and on the other hand, at least one section (28) which can be elastically deformed in a radial direction such as to grip the bearing element (6; 8) by force-locking pressure against it.

2. Bearing arrangement according to Claim 1,
**characterized in that**
at least two and preferably three elastically deformable sections (28) are distributed around the circumference.

3. Bearing arrangement according to Claims 1 or 2,
**characterized in that**
the two types of sections (26, 28) of the mounting (10) are uniformly distributed around the circumference of the mounting (10) of the bearing holder (12; 14) in alternation, the number of sections (26, 28) of each kind being equal and, in particular, six.

4. Bearing arrangement according to one or more of Claims 1 to 3,
**characterized in that**
before fitting of the bearing element (6; 8), the area of the elastically deformable section (28), or each of them, projects a slight distance in the radial direction inwards into a cylindrical contour defined by the inherently stable sections (26), such that when the bearing element (6; 8) is fitted, it will be pressed elastically outwards with the result that a holding force directed radially inwards is produced.

5. Bearing arrangement according to one or more of Claims 1 to 4,
**characterized in that**
the bearing holder (12; 14) consists of a one-piece tubular insert (20) of a stator insulation component (22).

6. Bearing arrangement according to Claim 5,
**characterized in that**
at least on the inside, the tubular insert (20) has a circumferentially closed and essentially cylindrical contour comprising the areas (30) forming the sections (26) of the mounting (10) having fixed shape, and thinner wall areas (32) forming the elastic sections (28).

7. Bearing arrangement according to Claim 6,
**characterized in that**
the thinner wall areas (32) are formed by axial recesses (34) in the tubular insert (20), each positioned between two areas (30) of fixed shape around the circumference.

8. Bearing arrangement according to one or more of Claims 1 to 7,
**characterized in that**
the bearing holder (12; 14) has a chamfered inner circumferential edge (36) on the opening side of the mounting (10).

9. Bearing arrangement according to one or more of Claims 1 to 8,
**characterized in that**
to support and allow rotation of the rotor, two similar bearing elements (6; 8) are provided, each respectively fitted into a bearing holder (12; 14) positioned in the area of the axially opposite stator end-faces.

10. Bearing arrangement according to one or more of Claims 1 to 9,
**characterized in that**
the bearing holder (12; 14), or at least one of them (14) has, in at least part of the areas (30) of the tubular insert (20) having fixed shape, axial fastening holes (38) to allow attachment of the stator (2) to the flange of a motor.

11. Bearing arrangement according to one or more of Claims 1 to 10,
**characterized in that**
the bearing element (6; 8), or each of them, consists of a roller bearing with an outer ring (9) clipped force-lockingly into its respective bearing holder (12; 14) and an inner ring (15) through which the rotor shaft passes.

## Revendications

1. Agencement de palier (4) pour moteurs électriques, en particulier pour moteurs à induit extérieur, au moins un élément de palier (6, 8) disposé dans un logement (10) d'un élément d'accueil du palier (12, 14) d'un stator (2) étant prévu pour le montage rotatif d'un rotor,
caractérisé en ce que le logement (10) de l'élément d'accueil du palier (12, 14) est formé d'une part par des sections (26) de forme stable positionnant l'élément de palier (6, 8) par application en au moins trois points répartis sur la périphérie, et, d'autre part, par au moins une section (28) déformable élastiquement dans la direction axiale, maintenant l'élément de palier (6, 8) par l'application d'une force.

2. Agencement de palier selon la revendication 1,
caractérisé en ce qu'au moins deux, de préférence au moins trois, sections déformables élastiquement (28) sont réparties sur la périphérie.

3. Agencement de palier selon la revendication 1 ou 2,
caractérisé en ce que les deux types de sections (26, 28) du logement (10) sont uniformément réparties par nombre égal de sections, en particulier six sections (26, 28), en alternance sur la périphérie du logement (10) de l'élément d'accueil du palier (12, 14).

4. Agencement de palier selon l'une ou plusieurs des revendications 1 à 3,
caractérisé en ce que, avant le montage de l'élément de palier (6, 8), des régions de la section, respectivement de chaque section, élastiquement déformable (28) font légèrement saillie radialement vers l'intérieur dans un contour cylindrique défini par les sections de forme stable (26), de manière à être élastiquement poussées vers l'extérieur par l'élément de palier (6, 8), au montage de celui-ci, une force de maintien dirigée radialement vers l'intérieur étant alors engendrée.

5. Agencement de palier selon l'une ou plusieurs des revendications 1 à 4,
caractérisé en ce que l'élément d'accueil du palier (12, 14) est formé par un appendice (20) en forme de section de tube d'une pièce d'isolation (22) du stator.

6. Agencement de palier selon la revendication 5,
caractérisé en ce que l'appendice en forme de section de tube (20) présente au moins à l'intérieur un contour cylindrique fermé sur sa périphérie, formé par les régions (30) constituant les sections de forme stable (26) du logement (10), ainsi que par des sections de paroi plus minces (32) formant les sections élastiques (28).

7. Agencement de palier selon la revendication 6,
caractérisé en ce que les sections de paroi plus minces (32) sont fermées par des évidements axiaux (34) de l'appendice en forme de section de tube (20) respectivement disposées dans la direction périphérique entre deux régions (30) de forme stable.

8. Agencement de palier selon l'une ou plusieurs des revendications 1 à 7,
caractérisé en ce que l'élément d'accueil du palier (12, 14) présente sur le côté ouvert du logement (10) un bord périphérique intérieur chanfreiné (36).

9. Agencement de palier selon l'une ou plusieurs des revendications 1 à 8,
caractérisé en ce que, pour le montage rotatif du rotor, on a prévu deux éléments de palier (6, 8) maintenus de façon identique dans un élément d'accueil du palier respectif (12, 14) et disposés dans la région des faces frontales axialement en regard du stator.

10. Agencement de palier selon l'une ou plusieurs des revendications 1 à 9,
caractérisé en ce que l'élément d'accueil du palier (12, 14), respectivement au moins l'un de ces éléments (14), présente, dans la région d'au moins une partie des régions de forme stable (30) de l'appendice en forme de section de tube (20), des ouvertures de fixation axiales (38) pour maintenir le stator (2) sur une collerette de moteur.

11. Agencement de palier selon l'une ou plusieurs des revendications 1 à 10,
caractérisé en ce que l'élément de palier, respectivement chaque élément de palier (6, 8) présente la forme d'un palier à roulement comportant une bague extérieure (9) maintenue dans l'élément d'accueil du palier respectif (12, 14) et une bague intérieure (15) que traverse un arbre de rotor.
